# EUROPEAN PATENT APPLICATION

(11) **EP 1 942 682 A2**
(43) Date of publication of application: **09.07.2008**
(21) Application number: 07397501.3
(22) Date of filing: 20.12.2007
(51) Int. Cl.: H04N 17/00

(54) **Reverse channel measurement in a cable television network**

(30) Priority: 22.12.2006 FI 20065853
(71) Applicant: Teleste Oyj, 20660 Littoinen (FI)
(72) Inventor: Halen, Sami, 20780 Kaarina (FI); Järvenpää, Pasi, 20780 Kaarina (FI)
(74) Representative: Pursiainen, Timo Pekka

(57) **Abstract**

A bidirectional network element adaptable to a cable television network, which comprises a transponder unit for measuring interferences of a reverse signal route, which transponder unit comprises a interference level indicator, a transceiver unit and an interference measurement program functionally connected to the transponder unit; and a processing unit for performing the interference measurement program of the transponder unit, which processing unit is arranged to compare the interference values of the reverse signal route received from the interference level indicator to at least one pre-set limit value, in which case as a response to the interference values exceeding the limit value, the processing unit is arranged to control the transceiver unit to send an interference message to a control unit of the cable television network.

## Description

### Field of the invention

The invention relates to an arrangement for reverse channel measurement in a cable television network.

### Background of the invention

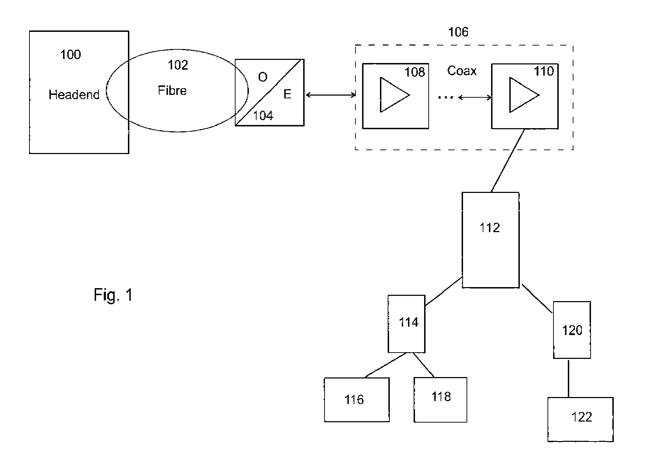

Cable television networks may be implemented with various techniques and network topologies, but currently most cable television networks are implemented as so-called HFC networks (Hybrid Fiber Coax), i.e. as combinations of a fibre network and a coaxial cable network. Figure 1 shows the general structure of a typical HFC network. Program services are introduced from the main amplifier 100 (a so-called headend) of the network via an optical fibre network 102 to a fibre node 104, which converts the optical signal to an electric signal to be relayed further in a coaxial cable network 106. Depending on the length, branching, topology, etc. of the coaxial cable network, this coaxial cable segment typically comprises one or more broadband amplifiers 108, 110 for amplifying program service signals in a heavily attenuating coaxial media From the amplifier the program service signals are introduced to a cable network 112 of a smaller area, such as a master antenna network of an apartment building, which are typically implemented as coaxial tree or star networks. From this type of a master antenna network the signal is further relayed either via a cable modem 114 to a television receiver 116 or a computer 118, or via a so-called set-top box 120 to a television receiver 122.

Typically the HFC network also provides its users a reverse channel, via which it is possible, for example, to send data signal from a cable modem via the HFC network further to the Internet or to use interactive services provided by a cable television operator, such as electronic trading, different games and video-on-demand services. Transmission of reverse signals in the same coaxial media with forward program service signals causes, however, noise and so-called RF-ingress interference, which decreases the bandwidth used in the reverse direction. Ensuring the operation of a cable television system requires, in addition to other measurements, also the analysis of reverse channels. In order to support the centralized management of the network the analysis of the reverse direction is typically performed at the main amplifier 100 of the network, in which case if a problematic network segment can be detected the amplifier of the network segment in question can be directed to cut off or at least sufficiently attenuate the reverse signal route.

Locating and isolating the problem with the main amplifier may, however, be difficult, because hundreds of reverse channel signals may simultaneously arrive at the centralized main amplifier. In practice, information on the location of the problem is significantly inaccurate both geographically and in terms of network topology. Thus, a significant amount of time is spent on locating and isolating the problem, and a large number of personnel is needed for locating the problem, which has a direct effect on the competitiveness of the operator in the form of poorer customer satisfaction, and thus also on the profitability of the business. In addition, if the signal route of the network segment is cut off once the problem area has been found, the possibility to measure the existence of an interference is lost after the signal route of the branch in question is cut off.

### Brief summary of the invention

Now, an improved arrangement has been developed to reduce the above-mentioned problems. As different aspects of the invention, we present a bidirectional network element adaptable to a cable television network as well as a transponder unit adaptable to such a network element, which are characterized in what will be presented in the independent claims.

The dependent claims disclose advantageous embodiments of the invention.

The invention is based on the idea that the network element comprises a transponder unit for measuring interferences of a reverse signal route, which transponder unit comprises a interference level indicator, a transceiver unit and an interference measurement program functionally connected to the transponder unit; and a processing unit for performing the noise measurement program of the transponder unit, which processing unit is arranged to compare the interference values of the reverse signal route received from the interference level indicator to at least one pre-set limit value. If the interference values exceed said limit value, the processing unit is arranged to control said transceiver unit to transmit an interference message to a control unit of the cable television network.

In other words, by taking the interference analysis closer to the source of the interference, it is possible to limit the problem area more closely. This accelerates the isolation of the problem area and, in addition, it is possible to take action automatically.

According to an embodiment the network element also comprises a directional coupler as a measurement point for reverse signal route interferences, which directional coupler is arranged to input samples of the reverse signal to the interference level indicator of the transponder unit; and a reverse signal route cutoff point, which is arranged between said measurement point and said transceiver transmission point.

Further, according to an embodiment the processing unit is arranged to control said reverse signal route cutoff point on the basis of reverse signal route interference values received from the interference level indicator.

In other words, by placing the reverse cutoff after the measurement point, but before the transmission point of the transceiver, the existence of an interference can be examined even when the signal route is interrupted.

The other aspects, embodiments and advantages will be presented later in the detailed description of the invention.

### Brief description of the drawings

The invention will now be described in more detail in connection with preferred embodiments with reference to the appended drawings, in which:
- Fig. 1: shows the general structure of a typical HFC network; and
- Fig. 2: shows a broadband amplifier according to an embodiment in a simplified block chart.

### Detailed description of the invention

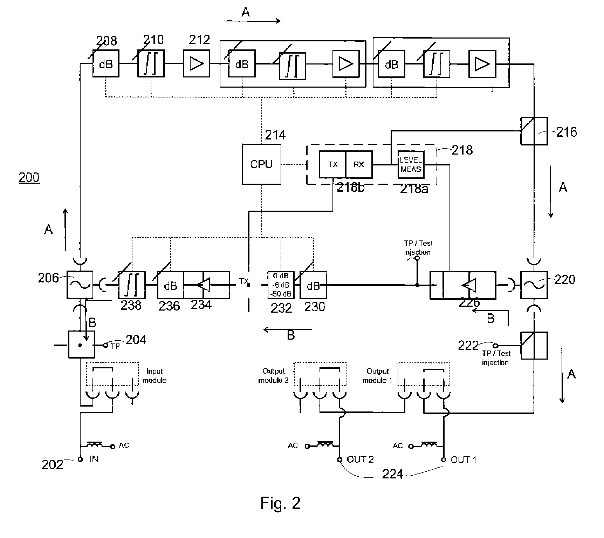

Figure 2 shows a broadband amplifier according to the invention by means of a simplified block chart. The purpose of figure 2 is to illustrate the operation of a broadband amplifier and especially a reverse channel measurement arrangement, and therefore, figure 2 does not necessarily show all the functional blocks of a typical broadband amplifier. In addition, it is to be noted that the reverse channel measurement arrangement according to the invention may be implemented, for example, in a HFC network fibre node (104 in figure 1) in addition to a broadband amplifier. In figure 2 the route of the forward signal, i.e. from the networks to client terminals, is illustrated by the arrow A and the route of the reverse signal, i.e. from the client terminals to the service provider, is illustrated by the arrow B.

The broadband amplifier 200 according to figure 2 comprises at least one input port 202, after which has been provide a tap for a test point 204 of the input signal. After the test point 204 of the input signal an input diplexer 206 has been arranged on the signal route, which directs the forward signal in the direction pointed by the arrow A, and the reverse signal to the direction pointed by the arrow B.

On a forward signal path the signal is introduced to the first attenuator block 208, which operates as a sensitivity controller, and from there further via a signal inclination controller 210 to a first amplifier 212. A broadband amplifier typically comprises several, for example 3 to 4 such combinations of an attenuator, signal inclination controller and amplifier, by means of which forward signal is amplified, and on the other hand the signal levels are controlled into balance so that noise and distortion of the signal remain within allowed limits. The broadband amplifier may advantageously comprise a micro processor 214, which controls the parameters of the above-mentioned blocks, for example, on the basis of different measurement results.

The amplified and controlled forward signal output from the last amplifier is introduced to a directional coupler 216, which enables sampling from the forward signal in order to measure signal levels. The signal samples are introduced to a transponder unit 218, which comprises an interference level indicator 218a, for example a controllable RF indicator, and a transceiver unit 218b, advantageously a modem. The transponder unit inputs, the samples further to the micro processor 214 to be analyzed, and on the basis of the analysis results the micro processor 214 controls the above-mentioned attenuators, signal inclination controllers and amplifiers to a suitable level. Further, on the forward signal path the signal is introduced to an output diplexer 220, which operates in a corresponding manner as the input diplexer, and from there further to a tap for a test point 222 of the output signal. In order to input the forward signal further to a cable television network the broadband amplifier comprises at least one, but advantageously several output ports 224.

For a reverse signal the broadband amplifier comprises, similarly to the forward signal path, attenuators, signal inclination controllers and amplifiers for controlling the reverse signal to a suitable level. The reverse signal route comprises an amplifier 226 arranged after an output diplexer 220, in connection with which amplifier is arranged a tap 228 for the test point of the reverse signal, as well as a directional coupler, by means of which it is possible to enter samples from the reverse signal to a controllable RF indicator 218a comprised by a transponder unit 218, and further to a micro processor 214 to be analyzed. Further, the reverse signal route may comprise one or more attenuators 230, 236, a second amplifier 234, and a signal inclination controller 238.

In order to implement the reverse channel measurement according to the invention the reverse signal route comprises a reverse signal cutoff point 232, which is advantageously arranged on the reverse signal route after a measurement point 226, but before a transmission point Tx of a modem 218b of a transponder unit 218. Thus, reverse channel measurement can advantageously be implemented so that the program of the transponder 218, advantageously performed by a micro processors 214, measures the desired signal frequencies by means of an RF indicator 218a and compares them to predetermined alarm limits. There may be various alarm limits, such as ones relating to the peak and average values of signal, as well as ones relating to time in different ways.

When the interferences reach a level, which prevents a successful transfer of payload signals, a remote-readable alarm is activated over an RF modem 218b or some other link to the main amplifier. Thus, the interruption can be located geographically clearly more accurately than in previous solutions. In addition, when the alarm limits are exceeded, a local alarm can be given, for example, by turning on a LED indicating an error mode of the amplifier, in which case the maintenance personnel arriving on site immediately detects an existing error situation. In any case, locating and reacting to an interference is possible to perform significantly faster and more accurately than in the monitoring solution performed by the main amplifier according to prior art.

The cutoff point 232 may be implemented, for example, by a stepwise-controllable attenuator, in which case the effect of the interference can, if desired, be diminished and limited by controlling the reverse attenuation of the amplifier automatically, or even cut off the reverse direction entirely. Naturally the cutoff point 232 in its simplest form can be implemented as a switch, in which case the only corrective procedure when interferences reach a limit value is to switch off the reverse signal entirely. However, even if the reverse signal were switched off entirely, the reverse signals can be measured and the amplifier can be in contact with the main amplifier by means of the RF modem, for example in order to transmit measurement data.

The RF indicator 218a comprised by the transponder unit may also be implemented in a simplified form with fixed frequency, in which case interferences are measured only from a certain frequency band. A tuner-based RF indicator, that is controlled by a program, is, however, a more flexible solution for different cable television networks, which enables the use of the disclosed broadband amplifier in very different network structures.

It will be obvious for a person skilled in the art that with technological developments, the basic idea of the invention can be implemented in a variety of ways. Thus, the invention and its embodiments are not limited to the above-described examples but they may vary within the scope of the claims.

## Claims

1. A bidirectional network element adaptable to a cable television network, which element comprises components necessary for implementing a forward signal route and components necessary for implementing a reverse signal route; **characterized in that** the network element comprises
a transponder unit for measuring interferences of the reverse signal route, which transponder unit comprises a interference level indicator, a transceiver unit and an interference measurement program functionally connected to the transponder unit; and
a processing unit for performing the interference measurement program of the transponder unit, which processing unit is arranged to compare the interference values of the reverse signal route received from the interference level indicator to at least one predetermined limit value,
in which case as a response to the interference values exceeding said limit value, the processing unit is arranged to control said transceiver unit to transmit an interference message to a control unit of the cable television network.

2. The network according to claim 1, **characterized in that** the network element also comprises
a directional coupler as a measuring point of interferences of the reverse signal route, which directional coupler is arranged to input samples of the reverse signal to the interference level indicator of the transponder unit; and
a cutoff point of a reverse signal route, which is arranged between said measurement point and the transmission point of said transceiver.

3. The network element according to claim 2, **characterized in that**
the processing unit is arranged to control said reverse signal route cutoff point on the basis of reverse signal route interference values received from the interference level indicator.

4. The network element according to claim 2 or 3, **characterized in that**
said reverse signal route cutoff point is a controllable attenuator, in which case the processing unit is arranged to control the reverse attenuation or, if necessary, to cut off the reverse signal entirely.

5. The network element according to claim 2 or 3, **characterized in that**
said reverse signal route cutoff point is a switch, in which case the processing unit is arranged to switch off the reverse signal entirely as a response to that the in-terference values of the reverse signal route received from the interference level indicator exceed at least one predetermined limit value.

6. The network element according to any of the preceding claims, **characterized in that**
said interference level indicator is a radio frequency indicator controlled by a program, which can be tuned to various frequencies.

7. The network element according to any of the claims 1 to 5, **characterized in that**
said interference level indicator is a fixed frequency radio frequency indicator.

8. The network element according to any of the preceding claims, **characterized in that**
the processing unit is arranged to switch on a local error indicator of the network element as a response to the interference values exceeding said limit value.

9. The network element according to any of the preceding claims, **characterized in that**
the network element is a broadband amplifier adaptable to a cable television network or a fibre node.

10. A transponder unit, which is adaptable to a bidirectional network element of a cable television network, **characterized in that** the transponder unit comprises
a interference level indicator, a transceiver unit and an interference measurement program functionally connected to the transponder unit for measuring interferences of a reverse signal route,
which transponder unit is functionally connected to a processing unit for performing the interference measurement program of the transponder unit so that the interference values of the reverse signal route received from the interference level indicator are compared to at least one predetermined limit value,
in which case as a response to the interference values exceeding said limit value, said transceiver unit is arranged to transmit an interference message to a control unit of the cable television network.

11. The transponder unit according to claim 10, **characterized in that**
said interference level indicator is a radio frequency indicator controlled by a program, which can be tuned to various frequencies.

12. The transponder unit according to claim 10, **characterized in that**
said interference level indicator is a fixed frequency radio frequency indicator.
